# EUROPÄISCHE PATENTSCHRIFT

(11) **EP 3 345 238 B1**
(45) Veröffentlichungstag und Bekanntmachung des Hinweises auf die Patenterteilung: **01.01.2020**
(21) Anmeldenummer: 16758222.0
(22) Anmeldetag: 01.09.2016
(51) Int. Cl.: H01M 8/1011, H01M 8/1007, H01M 8/04119, H01M 8/0612, H01M 8/04007

(54) **VERFAHREN UND VORRICHTUNG ZUM PARALLELEN KONDENSIEREN UND VERDAMPFEN FÜR EIN BRENNSTOFFZELLENSYSTEM MIT EINER KONDENSATIONS-/VERDAMPFUNGS-VORRICHTUNG SOWIE EIN BRENNSTOFFZELLENSYSTEM MIT EINER SOLCHEN KONDENSATIONS-/VERDAMPFUNGS-VORRICHTUNG**
METHOD AND DEVICE FOR PARALLEL CONDENSATION AND EVAPORATION FOR A FUEL CELL SYSTEM HAVING A CONDENSATION-EVAPORATION DEVICE, AND FUEL CELL SYSTEM HAVING SUCH A CONDENSATION-EVAPORATION DEVICE
PROCÉDÉ ET DISPOSITIF DE CONDENSATION ET ÉVAPORATION EN PARALLÈLE POUR UN SYSTÈME DE PILE À COMBUSTIBLE COMPORTANT UN DISPOSITIF DE CONDENSATION/ÉVAPORATION, ET SYSTÈME DE PILE À COMBUSTIBLE POURVU D'UN TEL DISPOSITIF DE CONDENSATION/ÉVAPORATION

(30) Priorität: 01.09.2015 DE 102015114613
(43) Veröffentlichungstag der Anmeldung: 11.07.2018
(73) Patentinhaber: Siqens GmbH, 80687 München (DE)
(72) Erfinder: HARBUSCH, Volker, 81369 München (DE); KRELLE, Jürgen, 81371 München (DE)
(74) Vertreter: HGF Europe LLP
(86) Internationale Anmeldenummer: PCT/EP2016/070655
(87) Internationale Veröffentlichungsnummer: WO 2017/037197

(56) Entgegenhaltungen:
- WO-A1-97/50140
- DE-A1- 19 802 038
- US-A1- 2004 166 389

## Beschreibung

Die vorliegende Erfindung betrifft ein Verfahren und eine Vorrichtung zum parallel Kondensieren und Verdampfen für ein Brennstoffzellensystem mit einer Kondensations-/Verdampfungsvorrichtung sowie ein Brennstoffzellensystem mit einer solchen Kondensations-/Verdampfungs-Vorrichtung.

In der EP 2 164 123 A1 ist ein Befeuchtungsmodul offenbart, bei dem die Kathodenluft vor dem Eintritt in die Kathode einer Brennstoffzelle mit aus dem Kathodenabgas bereitgestelltem Wasserdampf vorbefeuchtet wird. Zum Übertragen des Wasserdampfes aus dem Kathodenabgas auf die Kathodenluft ist eine Übertragungseinrichtung vorgesehen. Diese ist als für wasserdurchlässiges Kapillarrohrbündel ausgebildet.

Aus der DE 10 2008 061 771 A1) geht eine Brennstoffzelleneinheit für gasförmige Brennstoffe hervor, bei der vorgesehen ist, eine Befeuchtungseinrichtung zu verwenden und CO₂ als Trägergas im Kreislauf zu führen.

In der DE 199 03 168 C2 ist ein Spiralwärmetauscher offenbart, der bevorzugt zur Verdampfung von Medien in einem Brennstoffzellensystem verendet werden soll.

Hierbei ist vorgesehen ein Anoden- und ein Kathodenabgas einer Abgasnachbehandlungsstufe zuzuführen. In der Abgasnachbehandlungsstufe werden die brennbaren Bestandteile des Anodenabgases mit dem Sauerstoff und dem Kathodenabgas mit Hilfe eines geeigneten Katalysatormittels oxidiert. Durch die Oxidation in der Abgasnachbehandlungsstufe soll dem Abgas thermische Energie zugeführt werden. Das Abgas wird anschließend dem Wärmetauscher derart zugeführt, dass es diesen in axialer Richtung durchströmt und anschließend über an die Umgebung abgeführt wird. Ein zu verdampfendes Medium, also Wasser und/oder Methanol wird dem Wärmetauscher zugeführt und durchströmt diesen. Danach wird es einer Gaserzeugungsstufe gasförmig zugeführt. Somit dient der Spiralwärmetauscher gleichzeitig als gasbeheizter Verdampfer und als Abgaskühler für das Brennstoffzellensystem. Ein erstes Fluid (Abgas) wird somit in der Abgas-nachbehandlungsstufe vollständig umgesetzt und dann durch Räume des Wärmetauschers geführt. Als ein zweites Fluid werden die flüssigen Edukte für die Gaserzeugungsstufe durch Räume des Wärmetauschers geführt und durch den Wärmeaustausch mit den Räumen verdampft.

Aus der DE 199 45 715 A1 gehen ein Direkt-Methanol-Brennstoffzellensystem sowie ein entsprechendes Verfahren zum Betreiben desselben hervor. Dieses System umfasst eine Mischeinrichtung zum Bereitstellen eines Brennstoffgemischs, welches anschließend einem Verdampfer zugeführt wird und von dort in die Anodengasräume eines Brennstoffzellenstapels gelangt. Hierbei soll, im Verdampfer die Abwärme des verbrauchten Oxidants zur Verdampfung des unverbrauchten Brennstoffes zu verwenden. Hierbei ist die Verdampfungstemperatur geringer als die der Brennstoffzellenabgases. Die Verdampfungstemperatur richtet sich nach der Stöchiometrie des Methanol-Wasser-Gemischs und soll z. B. unter 100°C liegen. Aus dem Kathodenabgas soll im Verdampfer Produktwasser auskondensiert werden, das dann anschließend in einem Wasserabscheider von der gasförmigen Phase abgetrennt werden soll. Eine entsprechende Gasphase soll über eine Gasreinigungsanlage von unerwünschten Emissionen befreit werden. Die flüssige Phase soll dann einem Wassertank (zur Bereitstellung einer Methanollösung in Verb. mit einem Methanoltank) zugeführt werden.

Aus der US 2004/166389 A1 geht ein Direkt-Methanol-Brennstoffzellensystem hervor, das mit einer flüssigen Methanollösung betrieben wird. In diesem System wird in einem Mischbehälter mittels einer Gas-Flüssigkeits-Trennmembran Wasser aus dem Abgas der Brennstoffzelle zurückgewonnen und mit Methanol zu einer wässrigen Methanollösung vermischt. Das Restgas wird abgeführt. Des Weiteren ist das Brennstoffzellensystem mit einem Wärmetauscher ausgestattet. Dieser ist zwischen dem Mischbehälter und dem Anodeneinlass, sowie dem Anoden- und/oder Kathodenauslass angeordnet. Er dient zur Wärmeübertragung von dem Abgas auf die Brennstofflösung. Dadurch wird die Brennstofflösung vor dem Eintritt in die Anode auf Temperaturen von 50°C bis 90°C vorgeheizt und das Abgas der Brennstoffzelle auf Temperaturen unter 50°C abgekühlt, um den flüssigen Teil des Abgases im System zu behalten. Das Abgas kann dabei von der Kathode und/oder der Anode kommen.

In der WO 97/50140 A1 ist eine Direkt-Methanol-Brennstoffzelle (DMFC) offenbart, deren Brennstoff ein Methanol/Wassergemisch mit eventuellem Zusatz eines Inertgases ist. Der Brennstoffzelle ist ein Verdampfer vorgeschaltet, sodass der Brennstoff gasförmig im Anodenraum vorliegt.

Die DE 198 02 038 A1 beschreibt ebenfalls ein Verfahren und eine Vorrichtung zum Betreiben einer DMFC mit gasförmigem Brennstoff.

Aufgabe der vorliegenden Erfindung ist es, ein Verfahren und eine Vorrichtung zur effizienten Wasserrückgewinnung, und zur energieeffizienten Verdampfung von Brennstoff für ein Brennstoffzellensystem bereitzustellen.

Die Aufgabe wird durch den Gegenstand der unabhängigen Ansprüche gelöst. Bevorzugte Weiterbildungen der Erfindung sind Gegenstand der abhängigen Ansprüche.

Erfindungsgemäß ist ein Verfahren zum parallelen Kondensieren und Verdampfen für ein Brennstoffzellensystem mit einer Kondensations-/Verdampfungsvorrichtung vorgesehen, wobei die Kondensations-Verdampfungs-Vorrichtung (KVV) einen Kondensationsraum und einen Verdampfungsraum aufweist, die thermisch über eine Wärmetauschereinrichtung derart miteinander gekoppelt sind, dass im Kondensationsraum in einem Abgas eines Brennstoffzellenstapels enthaltener Wasserdampf zu Wasser kondensiert wird und im Verdampfungsraum ein flüssiger Brennstoff eines Zwei-Phasen-Gemisches umfassend den flüssigen Brennstoff und eine Gasphase, zumindest teilweise zu Brennstoffdampf verdampft wird, wobei die zum Verdampfen benötigte Energie zumindest teilweise durch Abwärme aus einem Abgas eines Brennstoffzellenstapels einer Brennstoffzelle bereitgestellt wird und der damit verbundenen Energieentzug aus dem Abgas eines Brennstoffzellenstapels zur Kondensation genutzt wird. Die vorliegende Erfindung zeichnet sich dadurch aus, dass die Gasphase ein Trägergas umfasst, das CO₂ ist.

Für eine ausreichende Prozesswasserversorgung des Brennstoffzellensystems mittels des im Kathodenabgas enthaltenen gasförmigen Wassers muss dieses entsprechend heruntergekühlt werden.

Um eine ausreichende Sauerstoffversorgung des Brennstoffzellenstapels zu gewährleisten, wird dieser üblicherweise mit einem Sauerstoffüberschuss von 100% betrieben, was einem Kathodenlambda von in etwa zwei entspricht.

Erfolgt diese Sauerstoffversorgung über Umgebungsluft, so liegt der Taupunkt bei ca. 60 °C, darüber kondensiert kein Wasser aus. Die Reformierung von Methanol und Wasser zu Wasserstoff und Kohlendioxid wird mit einem Wasserüberschuss von 30 % betrieben (Steam to Carbon Ratio (S/C) 1,3), da ansonsten der der Kohlenmonoxidanteil der Reaktion zu groß wird.

Somit muss das Kathodenabgas unter etwa 49 °C abgekühlt werden um die Wasserbilanz schließen zu können.

Um bei hohen Temperaturen bis etwa 50 °C genügend Wasser kondensieren zu können kann eine Wärmetauschereinrichtung genutzt werden, wobei das Kathodenabgas durch deren Kondensationsraum, und Methanol zusammen mit dem CO₂ umfassenden Trägergas durch deren Verdampfungsraum geleitet wird.

Für das Verdunsten des Methanols in das Trägergas wird Verdampfungsenergie benötigt, die dem Kathodenabgas entzogen wird und dieses dabei unter den Taupunkt abkühlt. Durch ein entsprechendes Verhältnis von Trägergas (CO₂) zu Methanol lässt sich das Kathodenabgas erfindungsgemäß unabhängig von der Umgebungstemperatur derart herunterkühlen, dass ausreichend Wasser auskondensiert wird, um die Wasserbilanz zu schließen.

Würde man durch den Verdampfungsraum lediglich ein Methanol Wassergemisch ohne das inerte Trägergas CO₂ leiten, wie dies gemäß der DE 199 45 715 A1 vorgesehen ist, so stünde als tiefstes Temperaturniveau der Siedepunkt des Brennstoffes zur Verfügung. Dieser liegt bei reinem Methanol unter Normdruck bei etwa 65 °C, leitet man ein Methanol-/Wassergemisch mit einem S/C (Steam to Carbon Ratio) von 1,3 durch den Verdampfungsraum, so liegt der Siedepunkt bei etwa 74,5 °C.

Somit ist eine Wasserrückgewinnung aus dem Kathodenabgas ohne ein inertes Trägergas nicht möglich, da der Siedepunkt des Brennstoffes bzw. des Brennstoffgemisches zu hoch ist und somit ein Auskondensieren nicht möglich ist.

Dadurch, dass erfindungsgemäß ein inertes Trägergas, nämlich CO₂ vorgesehen ist, ist eine Wasserrückgewinnung aus dem Kathodenabgas möglich, da der Siedepunkt des Brennstoffes bzw. des Brennstoffgemisches niedrig genug ist, um Wasser auszukondensieren.

Mit der vorliegenden Erfindung ist es zum ersten Mal möglich ein Brennstoffzellensystem auch in heißen Gegenden zu betreiben in denen durch eine alleinige Luftkühlung die für eine ausreichende Wasserrückgewinnung notwendigen Temperaturen des Brennstoffzellenabgases nicht erreicht werden können bzw. nicht wirtschaftlich sind oder zu große Wärmetauscher erfordern. Mit dem vorliegenden Kondensationsraum, und der darin stattfindende Kondensation kann Produktwasser, welches für den Betrieb benötigt wird, auch bei hohen Außentemperaturen gewonnen werden.

Der Vorteil einer Wasserrückgewinnung besteht darin, dass dem Brennstoffzellensystem während des Betriebs kein extra Wasser bzw. kein verdünnter Brennstoff zugeführt werden muss, da das Wasser in der KVV zurückgewonnen wird und daher für den weiteren Betrieb zur Verfügung steht. Dies verringert zudem die Anforderungen an die Infrastruktur erheblich. Im Verhältnis zu verdünnten Brennstoffen hat der unverdünnte Brennstoff einen höheren Energieinhalt, was Transportgewicht und Treibstoffkosten spart.

Die KVV lässt sich auch für Brennstoffzellensysteme mit großer Leistung verwenden.

Des Weiteren ist die KVV äußerst kostengünstig aufgebaut, zuverlässig im Betrieb und wartungsarm.

Die KVV bzw. deren Wärmetauschereinrichtung ist erheblich kleiner als die notwendigen Wärmetauscher bei rein luftgekühlten Systemen. Dies verringert den Bauraum, das Gewicht des Systems und vermindert die Transportkosten. Die Wärmetauschereinrichtung weist einen geringen Bauraum auf, da sich ein ausreichender Temperaturunterschied durch die Verdampfung des Brennstoffes auf einer Kühlseite des Kondensationsraumes, wobei die Kühlseite eine an die Wärmetauschereinrichtung angrenzende Wandung und somit eine an den Verdampfungsraum angrenzende Wandung des Kondensationsraums ist, einstellt bzw. eingestellt werden kann. Dieser Temperaturunterschied ist höher als wenn bei hohen Außentemperaturen mit Luft gekühlt wird. Außerdem wird Wärme nicht nur an eine Gasphase sondern auch an eine Flüssigkeit abgegeben wird. Dadurch stellt sich ein besserer Wärmeübergang an der Wärmeaustauschfläche ein. Somit werden wesentlich kleinere Flächen von Wärmetauschern als bei einer Kühlung mit Luft benötigt.

Der Kondensationsraum und der Verdampfungsraum der KVV können vorzugsweise im Gegnstrom betrieben werden, d.h. die entsprechenden Medien werden dem Kondensationsraum und dem Verdampfungsraum derart zugeführt, dass ein Betrieb der KVV im Gegenstrom erfolgt.

Unter Brennstoffzellensystemen, für die die vorliegende Erfindung geeignet ist, werden im Rahmen der vorliegenden Erfindung Brennstoffzellensysteme verstanden, die bspw. einen Reformer verwenden, wobei bei der Reformerreaktion aus flüssigen Brennstoff die Produkte H₂ und CO₂ entstehen. Derartige Systeme sind bspw. Hochtemperatur- oder Niedertemperatur-Polymerelektrolytmembranbrennstoffzellen (HT-PEM oder NT-PEM).

Weiterhin werden unter diesen Brennstoffzellensystemen Systeme verstanden, bei denen der Brennstoff bspw. direkt in den Anodenraum eingebracht wird und am Anodenkatalysator unter Bildung von CO₂ reagiert. Derartige Systeme sind beispielsweise Direktmethanolbrennstoffzellen (DMFC) oder Hochtemperaturbrennstoffzellen (SOFC) sowie alle anderen Brennstoffzellen, bei denen Brennstoff verdampft werden muss.

Somit sind das erfindungsgemäße Verfahren und eine erfindungsgemäße Vorrichtung für Brennstoffzellensysteme geeignet, bei denen zur Versorgung der Brennstoffzelle bzw. eines Reformers ein gasförmiger Kreislauf vorgesehen ist, bei dem zumindest ein Teil des Gases CO₂ ist. Bei diesen Systemen ist vorgesehen, Brennstoffe, die bei Umgebungstemperatur und Systemdruck flüssig sind in die Gasphase zu überführen. Hierbei wird von Umgebungsdruck oder geringen Überdruck im System, beispielsweise bei Methanol, Ethanol, Diesel, Benzin oder höheren Drücken beispielsweise bei Brennstoffen wie Flüssiggas oder Dimethylether ausgegangen. Neben einer gasförmig versorgten DMFC, kann das Verfahren auch für DMFC Systeme welche mit flüssiger Methanollösung betrieben werden verwendet werden. Hierbei ist dann vorgesehen mit Anodenabgases (CO₂) des Brennstoffzellenstapels einen Gaskreislauf für den Kondensationsraum auszubilden.

Das Trägergas kann im Brennstoffzellensystem im Kreislauf geführt werden.

Die Gasphase kann auch Wasserstoff, Kohlenmonoxid, Wasserdampf, Reformat bzw. Zwischenprodukte der Reformierung, Brennstoffdampf oder Luft enthalten. Das Abgas aus dem das Wasser auskondensiert wird kann ein Kathoden- und/oder ein Anodenabgas und vorzugsweise Kathodenabgas eines Brennstoffzellenstapels sein.

Unter Abgas kann auch eine Mischung Kathoden- und Anodenabgas verstanden werden. In Ausnahmefällen kann das Verfahren auch verwendet werden, um ein anderes feuchtes Gas bspw. Anodenfeedgas, das zur Versorgung der Anodenseite eines Brennstoffzellenstapels vorgesehen ist, mittels des erfindungsgemäßen Verfahrens zu Trocknen.

Erfindungsgemäß ist somit vorgesehen, zum einen, die Abwärme des Kathoden- und/oder Anodenabgas eines Brennstoffzellenstapels zu nutzen, um Flüssigkeiten, wie z. B. flüssigen Brennstoff, Wasser oder eine Brennstofflösung zu verdampfen bzw. zu verdunsten. Auf diese Weise wird mittels einer Wärmetauscheinrichtung dem Kathoden- oder Anodengas der Brennstoffzelle Energie entzogen bzw. diese abgekühlt, um aus dem darin enthaltenen Wasserdampf Wasser aus zu kondensieren.

Somit ist erfindungsgemäß insbesondere vorgesehen, Wärme aus dem Abgas eines Brennstoffzellenstapels, auf einen Brennstoff in flüssiger Phase und einer Gasphase zu übertragen, wobei unter Brennstoff nicht nur reiner Brennstoff sondern auch eine wässrige Brennstofflösung wie z. B. Methanollösung verstanden wird und die Gasphase vorzugsweise CO₂ ist.

Diese Gasphase wird im Folgenden als Trägergas bezeichnet. Als Trägergase können auch von Sauerstoff abgereicherte Luft, Stickstoff oder andere inerte Gase vorgesehen sein.

Im Verdampfungsraum wird der flüssige Brennstoff des Zwei-Phasen-Gemisches, zumindest teilweise zu Brennstoffdampf verdampft. Unter zumindest teilweise wird im Rahmen der vorliegenden Erfindung eine Verdampfung von in etwa 10 % bis in etwa 60 % verstanden.

Im Verdampfungsraum kann das Trägergas mit flüssigem Brennstoff derart in Kontakt gebracht wird, dass eine, vorzugsweise nahezu vollständige, Sättigung des Trägergases mit Brennstoffdampfes erreicht wird.

Die zur Ausführung des Verfahrens verwendete erfindungsgemäße Vorrichtung ist eine Kondensations-/Verdampfungsvorrichtung für ein Brennstoffzellensystem umfassend einen Kondensationsraum zum Kondensieren von Wasser aus Wasserdampf aus einem Abgas eines Brennstoffzellenstapels und einen Verdampfungsraum zum zumindest teilweisen Verdampfen eines flüssigen Brennstoffes, zu Brennstoffdampf, wobei der Kondensationsraum und der Verdampfungsraum thermisch über eine Wärmetauschereinrichtung derart gekoppelt sind, dass die zum Verdampfen benötigte Energie zumindest teilweise durch Abwärme aus einem feuchten Abgas eines Brennstoffzellenstapels bereitgestellt wird und durch den damit verbundenen Energieentzug aus dem Abgas Wasser auskondensiert wird.

Somit wird das Verdunsten von Brennstoff, also die Anreicherung von Brennstoff und/oder Wasser in die CO₂- Phase genutzt, da hierbei Verdampfungsenergie benötigt wird, um dem Abgas in dem thermisch gekoppelten Kondensationsraum Wärmeenergie zu entziehen. Hierbei kommt es zu einer Absenkung der Abgastemperatur. Sobald der Sättigungspunkt erreicht ist, kondensiert das im Abgas enthaltene Wasser aus. Somit liegt dann auch im Kondensationsraum ein Zweiphasengemisch vor.

Die Flüssigphasen der zwei Fluide in dem Verdampfungs- und Kondensationsraum können sich im Gleichstrom bewegen. Die entsprechenden Gasphasen der beiden Fluide (Abgas und Trägergas) werden optimaler Weise im Gegenstrom geführt.

Die Wärmetauschereinrichtung ist derart ausgebildet, dass ein schneller Ausgleich der Temperaturniveaus des Kondensationsraums und des Verdampfungsraums erreicht wird. Die Wärmeströme sollen möglichst effizient vom Kondensationsraum in den Verdampfungsraum geleitet werden.

Die Wärmetauschereinrichtung kann dabei als Plattenwärmeübertragungseinrichtung ausgebildet sein, wobei die Platten des Plattenwärmetauschers derart ausgebildet sind, dass ein schneller Ausgleich des Temperaturniveaus des Kondensationsraums und des Verdampfungsraums möglich ist, um die Wärmeströme vom Kondensationsraum in den Verdampfungsraum effizient auszubilden.

Bei einer Plattenwärmeübertragungseinrichtung kann diese wellenförmig profilierte Platten umfassen, die derart zusammengesetzt sind, dass jeweils in den aufeinanderfolgenden Zwischenräumen einmal das aufzuwärmende und danach das wärmeabgebende Medium fließt (alternierend). Dieses Plattenpaket ist nach außen und zwischen den Medien abgedichtet. Das Plattenpaket kann nach außen isoliert sein.

In dem Fall, dass die Wärmetauschereinrichtung als Plattenwärmeübertragungseinrichtung ausgebildet ist, umfassen der Kondensationsraum und der Verdampfungsraum zumindest zwei und insbesondere mehrere Kammern, die entsprechend alternierend angeordnet sind.

Durch den Kontakt des flüssigen Anteils des Brennstoffgemisches mit Trägergas (bspw. CO₂) im Verdampfungsraum reichert sich der Dampf idealerweise bis zur Sättigung in die CO₂-Phase an. Weiterhin kann vorgesehen sein, dass der Verdampfungsraum bzw. die Verdampfungskammern teilweise mit Brennstoff gefüllt sind. Das Trägergas kann dann mittels einer Trägergaszuführeinrichtung durch den flüssigen Brennstoff an zumindest einer Stelle oder mehreren Stellen durchgeblubbert werden. Die Zuführung von Trägergas und Brennstoff in den Verdampfungsraum erfolgt vorteilhafterweise im Gleichstrom.

Alternativ oder zusätzlich kann auch vorgesehen sein das Trägergas mittels der Trägergaszuführeinrichtung in den Verdampfungsraum bzw. die Verdampfungskammern einzuleiten. Hierbei wird dann der flüssige Brennstoff im Gegenstrom auf die Wandungen des Verdampfungsraumes bzw. der Verdampfungskammern der Wärmeübertragungseinrichtung, insbesondere auf die vertikal angeordnete Platten der Plattenwärmeübertragungseinrichtung derart aufgebracht , dass er an diesen herunterrinnt und mit dem im Gegenstrom strömenden CO₂ verdampft.

Die Energie zur vollständigen Verdampfung benötigte Energie kann z.B. durch die im Kathodenabgas enthaltene thermische Energie bereitgestellt werden, bevor dieses in eine Vorkühleinrichtung und/oder in die Kondensations-Verdampfungs-Vorrichtung strömt.

Der Verdampfungsraum kann in einen weiteren Raum zur Überhitzung münden, der thermisch vom dem Verdampfungsraum bzw. dem Kondensationsraum isoliert ist bzw. mit diesem nicht oder nur geringfügig thermisch gekoppelt ist, wobei in diesem Raum ein weiterer Energieeintrag derart erfolgt, dass der Brennstoff vollständig verdampft wird.

Die thermische Kopplung bzw. der thermische Widerstand soll derart sein, dass kein oder nur ein unwesentlicher Energieeintrag in den Kondensationsraum erfolgt und die Kühlwirkung durch die Verdampfung des Brennstoffes nur unwesentlich vermindert wird.

Der Verdampfungsraum wird somit gemäß einer alternativen Ausführungsform beispielsweise mit dem weiteren Raum zur Überhitzung zu einer Überhitzungseinrichtung erweitert, in der der restliche nicht verdunstete flüssige Brennstoff oder die Brennstofflösung über den Siedepunkt erhitzt wird, so dass diese verdampfen.

Dem weiteren Raum kann Wasser zuführbar sein, das in dem Raum ebenfalls vorzugsweise vollständig verdampft wird.

Demgemäß werden dann, nicht nur der nicht in die CO₂ Phase verdunstete Brennstoff, sondern auch Wasser verdampft.

Der Raum kann durch Wärmequellen, derart erhitzt werden, dass eine reine gasförmige Versorgung von Reformer oder Brennstoffzelle mit den Reaktanden ermöglicht wird.

Wärmequellen können Abgase sein, z.B. eines Anodenabgasbrenners (z.B. katalytischer Brenner), Abgase des Brennstoffzellenstapels, wie z.B. die im Kathodenabgas enthaltene thermische Energie, oder eines Brenners welcher mit Brennstoff betrieben wird.

Um eine Kondensation in den damit verbundenen Leitungen zu verhindern, kann das Temperaturniveau in diesem nachgeschalteten Raum sogar noch über die zum Erreichen des Siedepunktes notwendige Temperatur angehoben werden.

Wenn keine Überhitzung stattfindet, wird das mit Brennstoff angereicherte Trägergas aus dem Verdampfungsraum der KVV, gegebenenfalls mit nicht verdampftem flüssigen Brennstoff, einem Verdampfer oder einer Befeuchtungseinrichtung zugeführt. Diese werden im Folgenden als Medieneinheit bezeichnet.

Unter einer Befeuchtungseinrichtung wird eine Einrichtung verstanden, wie sie bspw. in der internationalen Patentanmeldung WO 2015/110545 beschrieben ist, in der sich eine wässrige Brennstofflösung wie z. B. eine Methanollösung befinden und diese temperiert bzw. erhitzt wird, um Wasser bzw. nicht verdampften Brennstoff in das Trägergas zu verdunsten. Die Verdunstung bzw. Verdampfung erfolgt z.B. indem das Trägergas durch eine Brennstofflösung perlt und sich durch einen guten Kontakt zwischen Gas- und Flüssigphase, die Dampfdrücke der Lösung in der Gasphase einstellen. Hierbei ist die Temperatur der Befeuchtungseinrichtung unterhalb der Siedetemperatur der Brennstofflösung.

Unter einem Verdampfer wird eine Einrichtung verstanden, bei welcher zur Verdampfung das Trägergas und der Brennstoff sowie zugeführtes Wasser oder Brennstofflösung auf oder über den Siedepunkt erhitzt wird und vollständig verdampfen.

Bei beiden Systemen ist vorgesehen, die Verdampfungsenergie aus den Abgasen der Brennstoffzelle wie z.B. dem Abgas eines Abgasnachbehandlungsbrenners vollständig oder teilweise zu entnehmen.

Zur Versorgung von gasförmigen betriebenen DMFC-Systemen oder anderen Brennstoffzellensystemen, wie z. B. HT-PEM oder Phosphorsäurebrennstoffzellen (PAFC), bei denen Befeuchtungseinrichtungen angewandt werden, wird ein Trägergas mit zumeist noch nicht umgewandelten Brennstoff und Wasserdampf mit einer Brennstofflösung kontaktiert, so dass unter Umständen ein Teil des Dampfes wieder in die flüssige Phase übergehen kann. Der übrige Anteil des Brennstoffs verbleibt in dem Gasstrom, der der Medieneinheit entnommen wird und zum Reformerraum oder Anodenraum des Brennstoffzellensystems geführt wird.

Bei diesem System wird die Zuführung der Brennstoffmenge in den Verdampfungsraum derart eingestellt, dass für die benötigte Wasserstoffmenge ausreichend Brennstoff verdampft werden kann (in dem Verdampfungsraum und evtl. auch in dem Befeuchter). Die Einstellung der Zuführmenge beinhaltet auch die Brennstoffkonzentration in dem Befeuchter, bspw. mittels einer Steuereinrichtung. Daneben wird die Temperatur in der Brennstofflösung des Befeuchters passend z.B. auf 55 - 85°C eingestellt.

Dabei kann die Versorgung des Reformers bzw. des Brennstoffzellenstapels derart erfolgen, dass über die eingestellte Temperatur in dem Befeuchter und den Trägergasvolumenstrom, die Konzentration und die Menge von Wasserstoff im Reformatgas dem jeweiligen Betriebspunkt der Brennstoffzelle genügt bzw. an diesen angepasst wird.

Im Idealfall ist bei dem erfindungsgemäßen Verfahren bzw. der erfindungsgemäßen Vorrichtung vorgesehen, dass sich die Temperaturen im Kondensationsraum und im Verdampfungsraum anpassen. Somit ist vorgesehen, dass das Abgas, insbesondere das Kathodenabgas, aus dem Kondensationsraum kontinuierlich Abwärme an den Verdampfungsraum abgibt. Um dies zu realisieren, ist ein Wärmetauscher, der von beiden Medien im Gegenstrom durchströmt wird, bevorzugt.

Um die Temperatur derart einzustellen, dass die für die Reformer- oder Anodenreaktion benötigte Wassermenge in der Kondensation-Verdampfungs-Vorrichtung auskondensiert wird, kann eine Steuereinrichtung vorgesehen sein, die ausgebildet ist, um die nachfolgenden Parameter wie:
- Temperatur (Temperaturen der beiden Fluide vor und nach der KVV, zwischen Vorkühlungsstufen), und/oder
- Volumenstrom (Trägergasstrom, Kondensatmenge, Menge von nicht verdampften Brennstoff), und/oder
- Füllstände von Flüssigkeiten (z.B. der Phasentrennung nach dem Kondensationsraum der KVV oder den Füllstand in der Medieneinheit (Befeuchtungseinrichtung oder in dem Methanollösungsbehälter)
mittels entsprechender Sensoren zu erfassen und die Bauteile der erfindungsgemäßen Vorrichtung entsprechend anzusteuern. Werte die sich aufgrund des Systemverhaltens, oder aufgrund der Ansteuerung von Aktoren wie Gebläse oder Pumpen ergeben werden ermittelt und Mithilfe dieser Werte wird die Kondensationsmenge aus dem Abgas bzw. die Verdampfung des Brennstoffes mittels der Steuereinrichtung gesteuert. Dies erfolgt indem Aktoren wie: Pumpen (Trägergaspumpe, Kathodenpumpe), oder Lüfter (z.B. für die Vorkühlung oder der Brennstoffzellentemperatur), eingestellt werden. Die Steuereinrichtung kann derart ausgebildet sein, dass die Vorkühlung bzw. die Vorkühleinrichtung derart angesteuert wird, dass in der Kondensationseinrichtung eine bzw. in etwa die Menge an Wasser auskondensiert wird die zum Betrieb der erfindungsgemäßen Vorrichtung benötigt wird.

Die Erfindung ermöglicht einen Austritt der Fluide aus der KVV unabhängig von der Umgebungstemperatur. Diese Eigenschaft kann vorteilhafterweise genutzt werden um Komponenten oder Fluide auf einem stabilen Temperaturniveau zu temperieren. Bspw. kann die Pumpe welche das Trägergas fördert stabil betrieben werden, indem das Trägergas mithilfe eines Wärmetauschers auf ein vorbestimmtes Temperaturniveau gekühlt wird. Dies erfolgt indem auf einer kalten Seite eines Wärmetauschers das Brennstoffzellenabgas aus der KVV nach der Phasentrennung strömt und auf einer heißen Seite des Wärmetauschers das Trägergas im Gegenstrom strömt.

Es kann auch wie beschrieben Vorteilhaft sein das Abgas, nachdem das Kondensat abgetrennt wurde, bevor es aus dem System austritt zu erhitzen oder mit warmer Luft zu mischen um eine Vereisung des Abgasauslasses im Fall von niedrigen Umgebungstemperaturen zu verhindern.

Um die Abgase des Brennstoffzellenstapels abzukühlen bevor diese in den Kondensationsraum eintreten kann eine ggfs. mehrstufige Vorkühlung erfolgen.

Eine erste Vorkühlung des Kathodenabgases kann bspw. durch einen thermischen Kontakt mit der Brennstofflösung (z.B. Methanollösung) erfolgen welche sich in der Medieneinheit oder in einem Methanollösungsbehälter befindet. Der thermische Kontakt, mit der in der Medieneinheit enthaltenen Brennstofflösung kann durch einen mit Abgas durchströmten Wärmetauscher in der Medieneinheit (Rohrleitungs- oder Plattenwärmetauschereinrichtung) gegeben sein.

Eine zweite Vorkühlung kann durch thermischen Kontakt mit Umgebungsluft erfolgen. Hierbei ist vorgesehen mittels eines Wärmetauschers, z.B. eines Plattenwärmetauschers oder entsprechender Rohrleitungen mit Kühlrippen und einer Luftkühlung (z.B. Lüfter der die Kühlrippen mit Kühlluft anströmt) das Abgas vorzukühlen. Im Temperaturbereich in der die Vorkühlung mit Umgebungsluft arbeitet, z.B. eine Vorkühlung des Abgases auf 60°C kann auch eine Kühlung mit Umgebungsluft aufgrund eines Temperaturunterschiedes von Kühlluft und Abgas effizient erfolgen.

Eine weitere Möglichkeit ist die Zweiteilung des Methanolvorverdampfers bzw. des Verdampfungsraumes, bei dem das abzukühlende Abgas nach dem es einen ersten Verdampfungsraum durchströmt hat durch einen Wärmetauscher, der vorzugsweise als Plattenwärmetauscher ausgebildet ist, geführt wird und nach dem Austritt aus dem Wärmetauscher einem zweiten Verdampfungsraum zugeführt wird. Der Vorteil eines solchen Aufbaus ist, dass der Wärmetauscher bzw. der Kühler kleiner dimensioniert werden kann, da eine geringere Wärmemenge von diesem Kühler abgeführt werden muss. Zudem kann das Methanol, aufgrund der höheren erreichbaren Temperaturen des Trägergases vollständiger verdampft werden.

Des Weiteren lässt sich der Abgaskühler wesentlich verkleinern, wenn man anstatt das überschüssige CO₂ komplett mit den anderen Bestandteilen des Anodenabgases in einen Brenner zu entsorgen, nur das überschüssige CO₂ mit einen CO₂-Wäscher aus dem Anodenabgas entfernt, beispielsweise mithilfe eines Aminwäschers. Ein Aminwäscher ist eine Wascheinrichtung, die CO₂-aufnehmende Amine enthält. Dieser Aminwäscher kann mit der Abwärme des Brennstoffzellenstapels regeneriert werden.

Zusätzlich und/oder alternativ kann ein anderes CO₂-Abscheidungsverfahren derart verwendet werden, so dass der im Anodenabgas enthaltene Wasserdampf vollständig zurückgewonnen wird. Dies verringert den Wasserbedarf bei der Reformierung und den darin enthaltenen Wasserdampf, so dass eine geringere Wassermenge auskondensiert werden muss und damit der Abgaskühler kleiner ausgeführt werden kann.

Die vorstehenden Ausführungen zum erfindungsgemäßen Verfahren gelten gleichermaßen für die Vorrichtung und umgekehrt.

Die Erfindung wird im Folgenden anhand der Zeichnungen näher erläutert. Diese zeigen in
Fig. 1 eine schematische Darstellung eines HT/NT-PEM-Brennstoffzellensystems mit einer erfindungsgemäßen Kondensations-Verdampfungs-Vorrichtung,
Fig. 2 eine schematische Darstellung eines DMFC-Brennstoffzellensystems mit einer erfindungsgemäßen Kondensations-Verdampfungs-Vorrichtung,
Fig. 3 eine schematische Darstellung eines weiteren Ausführungsbeispiels eines NT-PEM-Brennstoffzellensystems mit einer erfindungsgemäßen Kondensations-Verdampfungs-Vorrichtung, und
Fig. 4 eine schematische Darstellung eines Ausführungsbeispiels eines zweigeteilten Methanolvorverdampfers bzw. Verdampfungsraumes mit zwischengeschaltetem Abgaskühler, und
Fig.5 eine schematische Darstellung eines Ausführungsbeispiels einer erfindungsgemäßen Kondensations-Verdampfungsvorrichtung und einem CO₂-Abscheider.

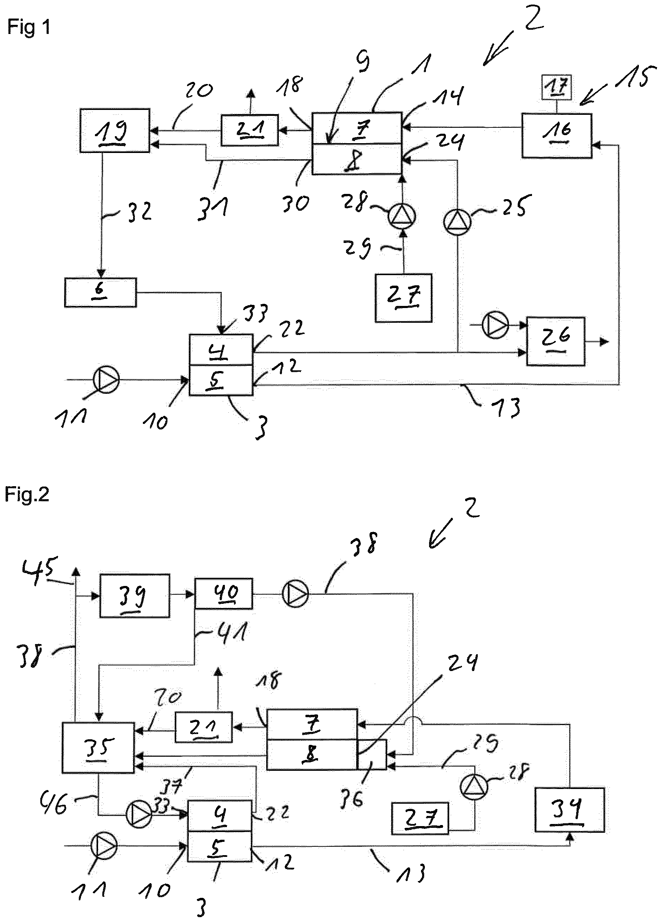

Im Folgenden wird eine erfindungsgemäße Kondensations-Verdampfungs-Vorrichtung 1 anhand eines HT-PEM-Brennstoffzellensystems 2 mit Methanol als Brennstoff beschrieben (Figur 1).

Dieses System 2 umfasst einen Brennstoffzellenstapel 3 mit einer Anodenseite 4 und einer Kathodenseite 5, eine Reformereinrichtung 6 und die Kondensations-Verdampfungs-Vorrichtung 1.

Die Kondensations-/Verdampfungs-Vorrichtung 1 umfasst einen Kondensationsraum 7 zum Kondensieren von Wasser aus dem im Kathodenabgas des Brennstoffzellenstapels 3 enthaltenen Wasserdampf und einen Verdampfungsraum 8 zum zumindest teilweisen Verdampfen von Methanol zu Methanoldampf. Der Kondensationsraum 7 und der Verdampfungsraum 8 sind thermisch über eine Wärmetauschereinrichtung 9 gekoppelt bzw. sind der Kondensationsraum 7 und der Verdampfungsraum 8 integraler Bestandteil der Wärmetauschereinrichtung 9.

Die Wärmetauschereinrichtung 9 ist bspw. als Plattenwärmeübertragungseinrichtung ausgebildet. Die Plattenwärmeübertragungseinrichtung 9 weist wellenförmig profilierte Platten (nicht dargestellt) auf, die derart zusammengesetzt sind, dass jeweils in den aufeinanderfolgenden Räumen einmal das aufzuwärmende (Verdampfungsraum) und danach das wärmeabgebende (Kondensationsraum) Medium strömt (alternierend). Diese Räume bilden entsprechend den Kondensationsraum 7 und den Verdampfungsraum 8 aus.

Die Kathodenseite 5 des Brennstoffzellenstapels 3 weist einen Einlass 10 zum Zuführen von Kathodenluft auf. Zum Zuführen von Kathodenluft kann eine Pumpe oder ein Gebläse 11 vorgesehen sein.

Ein Kathodenauslass 12 ist über einen Leitungsabschnitt 13 mit einem Einlass 14 des Kondensationsraums 7 der Kondensations-Verdampfungs-Vorrichtung 1 verbunden.

In diesem Leitungsabschnitt 13 ist eine Vorkühleinrichtung 15 integriert. Die Vorkühleinrichtung 15 kann beispielsweise einen Wärmetauscher 16 und einen Lüfter 17 sowie einen Temperatursensor (nicht dargestellt) umfassen, um Kathodenabgas abzukühlen.

Ein Auslass 18 des Kondensationsraumes 7 ist über einen Leitungsabschnitt 20 mit einer Medieneinheit 19, die beispielsweise als ein Verdampfer oder als eine Befeuchtungseinrichtung ausgebildet ist, verbunden.

In den Leitungsabschnitt 20 ist die Phasentrennungseinrichtung 21 derart integriert dass die flüssige Phase der Medieneinheit 19 zugeführt wird und die Gasphase aus dem System abgeführt wird bzw. entweichen kann. In diesen Leitungsabschnitt 20 kann eine Pumpe (nicht dargestellt) zur Kondensatförderung integriert sein.

Ein Anodenauslass 22 des Brennstoffzellenstapels 3 ist über einen Leitungsabschnitt 23 mit einem Einlass 24 des Verdampfungsraums 8 verbunden. In diesen Leitungsabschnitt 23 ist eine Pumpe 25 integriert.

Weiterhin ist an diesen Leitungsabschnitt 23 ein katalytischer Brenner 26 angeschlossen, um eine Abgabe von Abgasen wie Wasserstoff oder Kohlenmonoxid an die Umgebung zu verhindern. Die Oxidation erfolgt über eine Zuführung von Luftsauerstoff in den Abgasstrom. Die dabei erzeugte Wärme kann über eine thermische Kopplung bspw. der Medieneinheit zugeführt werden.

Weiterhin ist ein Brennstoffbehälter 27 vorgesehen, der ebenfalls in dem Verdampfungsraum 8 mündet und mit diesem über einen Leitungsabschnitt 29 verbunden ist. Zwischen Verdampfungsraum 8 und Brennstoffbehälter 27 ist eine Pumpe 28 vorgesehen. Anstelle der Pumpe 28 kann auch eine Dosiereinrichtung (nicht dargestellt) vorgesehen sein, die bspw. zwei Pumpen, ein Zwischenreservoir oder eine Pumpe mit Massenstrommessgerät umfasst.

Ein Auslass 30 des Verdampfungsraums 8 ist mittels eines Leitungsabschnitts 31 ebenfalls mit der Medieneinheit 19 verbunden.

Die Medieneinheit ist über einen Leitungsabschnitt 32 mit einem Anodeneinlass 33 verbunden.

In diesen Leitungsabschnitt 32 ist die Reformereinrichtung 6 integriert. Die Reformereinrichtung 6 kann eine oder mehreren in Reihe geschaltete Reformer bzw. Shift-Stufen umfassen.

Alternativ kann die Wärmeübertragungseinrichtung auch als Spiralwärmeübertrager, Rohrwärmeübertrager bzw. Rohrbündelwärmeübertrager, U-Rohr-Wärmeübertrager, Mantelrohrwärmeübertrager, Heizregister bzw. Kühlregister oder als Gegenstrom-Schichtwärmeübertrager ausgebildet sein.

Im Folgenden wird der Betrieb dieses Brennstoffzellensystems erläutert.

Bei diesem Brennstoffzellensystem ist vorgesehen, dass die Anode des Brennstoffzellenstapels mittels Reformat direkt über die Reformereinrichtung 6 versorgt wird. Weiterhin weist das Brennstoffzellensystem 2 einen CO₂-Kreislauf auf. Über diesen Kreislauf werden CO₂ als Trägergas sowie Wasser- und Brennstoffdampf der Reformereinrichtung 6 zuführen.

In der Reformereinrichtung 6 findet eine Wasserdampf-Reformation statt, bei der aus Methanol und Wasser Wasserstoff und Kohlendioxid erzeugt wird (CH₃OH + H₂O -> 3H₂ +CO₂), dabei wird Wasser als Oxidationsmittel zur Gewinnung von Wasserstoff eingesetzt.

Die Kondensations-Verdampfungs-Vorrichtung 1 ist zur Gewinnung von Produktwasser aus dem Kathodenabgas ausgebildet.

Bei einem derartigen Brennstoffzellensystem 2 enthält das Kathodenabgas mehr Wasserdampf als Reaktionsprodukt der Kathodenreaktion als für die Wasserstoffgewinnung benötigt wird. Die Kühlenergie der Brennstoffdampfmenge, die in den eingestellten Trägergasvolumenstrom gelangt, ist dennoch zu gering, um das Abgas auf die benötigten Temperaturen abzukühlen, und um genügend Wasser auszukondensieren. Daher ist die Vorkühleinrichtung 15 vorgesehen.

In der Medieneinheit 19 wird Methanol verdampft bzw. wird dampfförmig von einem Trägergasstrom aufgenommen und der Reformereinrichtung 6 zugeführt.

Im Kondensationsraum 7 der Kondensations-Verdampfungs-Vorrichtung 1 erfolgt eine Kühlung des Kathodenabgases durch den thermischen Kontakt mit dem Verdampfungsraum 8 über die Wärmetauschereinrichtung. Auf diese Weise wird Wasser aus dem im Kathodenabgas enthaltenen Wasserdampf auskondensiert und steht dem System 2 wieder zur Verfügung.

Die Abtrennung des Kondensats vom Abgasstrom kann beispielsweise in der Phasentrennungseinrichtung 21 mittels Schwerkraft oder einer Pumpe erfolgen. Das Kondensat wird anschließend der Medieneinheit 19 zugeführt, in die auch der CO₂-Brennstoffdampf-Strom eingebracht wird.

Wenn die Medieneinheit 19 als Befeuchtungseinrichtung ausgebildet ist stellt sich in der Flüssigkeitsphase der Befeuchtungseinrichtung je nach Molarität der dort vorliegenden Brennstofflösung und Temperatur ein neues Gleichgewicht der Dampfdrücke von Wasser und Brennstoffdampf im Trägergas ein.

Das bedeutet, im Fall, dass nur Brennstoff verdampft wird, wird zusätzlich Wasserdampf in die Gasphase mitaufgenommen. Je nach Dampfdruck des zugeführten Gases wird zusätzlicher Brennstoffdampf von der Gasphase aufgenommen oder in die Brennstofflösung kondensiert.

Die Medieneinheit 19 kann auch eine Verdampfereinrichtung sein in der Brennstoff und Wasser vollständig verdampft wird.

Zudem kann neben der Vorkühleinrichtung 15 durch Luft eine weitere Vorkühlung vorgesehen sein, die z.B. durch thermischen Kontakt (mittels eines Wärmetauschers) mit einem flüssigen Medium (Wasser, Brennstoff oder Brennstofflösung) in der Medieneinheit 19 das aus der Brennstoffzelle 3 austretende Gas vorkühlt. Dieser Wärmetauscher kann durch einen Plattenwärmetauscher oder entsprechender Rohrleitung mit Kühlrippen, welche sich in die Flüssigkeit erstrecken, ausgebildet sein.

Im Folgenden wird ein weiteres Ausführungsbeispiel der Kondensations-Verdampfungs-Vorrichtung 1 anhand eines NT-PEM-Brennstoffzellensystems 2 beschrieben (Figur 1).

Sofern nichts anderes beschrieben ist entspricht dieses Ausführungsbeispiel dem vorstehend beschriebenen Ausführungsbeispiel. Gleiche Bauteile sind mit den gleichen Bezugszeichen versehen.

Gemäß diesem Ausführungsbeispiel ist die Reformereinrichtung 6 mehrstufig bzw. mit zumindest einer Shift-Stufe ausgebildet.

Bei dem Einsatz einer Niedertemperaturbrennstoffzelle erfolgt eine aufwendigere Reformierung mit Shift-Stufen bei niedrigeren Temperaturen und/oder selektiver Oxidation und/oder einem Reformer mit dafür geeigneten Katalysatoren, um einen möglichst niedrigen Kohlenmonoxidgehalt (z.B. 50 ppm) bzw. um neben Kohlendioxid und Wasserdampf möglichst keine anderen Stoffe im Wasserstoff zu haben.

Ansonsten wird das erfindungsgemäße Verfahren analog zum vorstehend beschriebenen HT-PEM-Brennstoffzellensystem ausgeführt.

Bei dem Einsatz einer Festoxidbrennstoffzelle (SOFC) kann dagegen der Reformer weggelassen werden bzw. wird den Ansprüchen des Systems angepasst.

Im Folgenden wird ein weiteres Ausführungsbeispiel der Kondensations-Verdampfungs-Vorrichtung 1 anhand eines DMFC-Brennstoffzellensystems 2 beschrieben (Figur 2).

Sofern nichts anderes beschrieben ist entspricht dieses Ausführungsbeispiel dem vorstehend beschriebenen Ausführungsbeispielen. Gleiche Bauteile sind mit den gleichen Bezugszeichen versehen.

Der Kathodenauslass 12 des Brennstoffzellenstapels ist über den Leitungsabschnitt 13 mit dem Kondensationsraum 7 der Kondensations-Verdampfungs-Vorrichtung 1 verbunden.

In diesem Leitungsabschnitt 13 ist eine Wärmetauschereinrichtung 34 zur Vorkondensation integriert.

Der Auslass 18 des Kondensationsraumes 7 ist über den Leitungsabschnitt 20 mit einem speziellen Methanollösungsbehälter 35, der als Pufferspeicher dient, verbunden. Dieser Behälter 35 enthält zwei Phasen, eine flüssige Phase (Methanollösung) und eine Gasphase (Anodenabgas (CO₂)).

In den Leitungsabschnitt 20 ist die Phasentrennungseinrichtung 21 derart integriert dass die flüssige Phase dem Behälter 35 zugeführt wird und die Gasphase aus dem System entweichen kann.

Der Brennstoffbehälter 27 ist über den Leitungsabschnitt 29 mit dem Einlass 24 des Verdampfungsraumes verbunden.

Am Einlass 24 des Verdampfungsraumes 8 ist eine Verteilungseinrichtung 36 zur gleichmäßigen bzw. optimalen Beschickung des bzw. der Verdampfungsräume mit CO₂ und Brennstoff vornehmlich im Gleichstrom vorgesehen. Der Gleichstrom verhindert ein zu starkes Abkühlen des Trägergases und somit seine Aufnahmefähigkeit von Brennstoff. Die Verteilungseinrichtung 36 kann auch als Ventileinrichtung zur Steuerung entsprechender Volumenströme ausgebildet sein.

Zum Zirkulieren der Methanollösung ist ein Leitungsabschnitt 37 vom Anodenauslass 22 zur Methanollösungsbehälter 35 vorgesehen.

Weiterhin ist bei diesem System ein weiterer Gaskreislauf, wobei in dem Gaskreislauf Anodenabgas als Trägergas verwendet wird, vorgesehen sein.

In diesen Gaskreislauf wird ein Teil des bei der Anodenreaktion entstehenden CO₂, das aus dem Brennstoffzellenstapel 3 als Anodenabgas austritt rezirkuliert.

Der nicht benötigte Rest dieses Gases kann über einen mit dem Leitungsabschnitt 38 verbundenen Gasauslass 45 abgeführt werden.

Zum Rezirkulieren führt ein Leitungsabschnitt 38 von einem die Gasphase enthaltenden Raum des Methanollösungsbehälters 35 zum Einlass 24 des Verdampfungsraumes 8.

In diesem Leitungsabschnitt 38 bzw. in den Gaskreislauf kann zudem eine Wärmetauscher-Einrichtung 39 sowie eine Phasentrennungseinrichtung 40 integriert sein.

Die Phasentrennungseinrichtung 40 weist eine Rückführleitung 41 zum Methanollösungsbehälter 35 auf.

Im Methanollösungsbehälter 19 strömt das zwei Phasengemisch des Anodenfluides vom Anodenauslass 22, wobei das Gas darin abgetrennt und teilweise zum Verdampfungsraum der KVV 1, zum Beispiel mittels einer Pumpe, rezirkuliert wird.
Der nicht zirkulierte Teil wird über einen Leitungsabschnitt 44 aus dem System ausgetragen. Zu dessen Reinigung kann wiederum ein Nachbrenner eingesetzt werden.

Um die Methanolaufnahme im Verdampfungsraum 8 der KVV 1 zu erhöhen kann die CO₂-Phase vor dem Eintritt in die KVV 1 in der Wärmetauschereinrichtung 39 gekühlt werden um Wasser- und Methanoldampf zu kondensieren und in der Phasentrennungseinrichtung 21 abgeschieden werden.

Die Wärmetauschereinrichtung 39, die bspw. luftgekühlt ist oder durch thermische Kopplung mit dem Kondensationsraum kühlbar ist, und die Phasentrennungseinrichtung 40 sind jedoch bei einem DMFC Brennstoffzellensystem 2 nicht zwingend erforderlich. Insbesondere beim Betrieb mit niedrigen Methanolkonzentrationen kann auf diese verzichtet werden.

Um eine geringere Methanolkonzentration in dem Trägergas zu erreichen kann auch eine mit Methanol abgereicherte Zone im Methanollösungsbehälter 35 ausgebildet sein. Dann ist der Gasraumes des Behälters 35 in einen oberen Raum und einen unteren Raum unterteilt (nicht dargestellt). Im oberen Raum wird das in der Brennstoffzelle 3 abgereicherte Anodenfluid eingebracht, wobei die Methanollösung in den unteren Raum mit der flüssigen Phase des Pufferspeichers mittels Schwerkraft oder einer Fördereinrichtung fliest. Die Gasphase (vornehmlich CO₂) im oberen Raum wird teilweise zum Verdampfungsraum 8 gefördert und der Rest wird aus dem System als Anodenabgas ausgetragen (nicht dargestellt).

Alternativ kann auch über eine zusätzliche Phasentrennung im Leitungsabschnitt 37 vom Anodenfluid Trägergas mit geringerem Methanoldampfdruck entnommen werden. (nicht dargestellt).

In dem Verdampfungsraum 8 kommt es zum Kontakt zwischen CO₂ mit zugeführtem Methanol aus einem Methanoltank bzw. Brennstoffbehälter 27 und zu dessen Verdunstung. Das ausströmende Gemisch aus Methanol und CO₂ wird anschließend in den Methanollösungsbehälter 35 eingeleitet
Der Methanollösungsbehälter 35 ist über einen Leitungsabschnitt 46 mit dem Anodeneinlass 33 des Brennstoffzellenstapels 3 verbunden.

Die Phasentrennungseinrichtung 40 ist über einen Leitungsabschnitt 41 mit dem Methanollösungsbehälter 35 verbunden.

Üblicherweise haben DMFC Systeme einen Pufferspeicher mit einer Methanol-Lösung, bestehend aus Methanol und Wasser, zur Versorgung der Anodenelektroden. Diese Lösung wird nachdem sie die Anode passiert hat und dort abgereichert wurde in den Speicher zurückgeführt. Dem Speicher wird Wasser und Methanol oder Methanollösung zugeführt, um die Abreicherung auszugleichen. Bei Systemen die ausschließlich mit reinem Methanol versorgt werden muss das Wasser aus dem Kathodenabgas gewonnen werden. Dies wird durch Kondensation von Produktwasser in der Kathode ermöglicht.

Um die KVV 1 bei DMFC-Brennstoffzellensystemen 2 zu verwenden muss notwendigerweise Trägergas bereitgestellt werden, also der vorstehend beschriebene Gaskreislauf vorgesehen werden.

In Verdampfungsraum 8 kommt es zum Kontakt zwischen CO₂ mit zugeführtem Methanol aus dem Brennstoffbehälter 27 und zu dessen Verdunstung. Das ausströmende Gemisch aus Methanol und CO₂ wird anschließend in die Methanollösung des Pufferspeichers 35 eingeleitet. In der Methanol-Lösung (niedermolar, z.B. 0,5- 3 molar) kondensiert das Methanol größtenteils wiederum aus und gibt dabei Verdampfungswärme ab, wodurch sich innerhalb der Lösung ein höheres Temperaturniveau einstellt, welches sich auf die von der Methanollösung durchströmte Brennstoffzelle überträgt. Bei einer Temperaturerhöhung der Brennstoffzelle z.B. von 70 °C auf 85 °C wird kann von einer erheblichen Leistungssteigerung ausgegangen werden.

Das KVV 1 kann auch ausschließlich zur Erhöhung der Betriebstemperatur dienen, falls durch Zufuhr eines Methanol-Wasser Gemischs (z.B. aus dem Puffertank (nicht dargestellt)) auf die Wasserkondensation verzichtet werden kann. In diesem Fall wird das Kathodenkondensat nicht dem Methanollösungsbehälter zugeführt, sondern beispielsweise mit dem Abgas ausgetragen. Im Verdampfungsraum der KVV wird dann anstelle von reinem Methanol die Methanol-Lösung zugeführt und verdampft.

Die Kathodenkondensation erfolgt wie im ersten Aufführungsbeispiel beschrieben.

Bei einer gasförmigen Versorgung einer der DMFC, z. B. mittels einer Befeuchtungseinrichtung, welche bewirkt, dass aus der Methanol-Lösung Dämpfe an die CO₂-Phase abgegeben werden, wird ein Teil des gasförmigen Anodenfluids (CO₂, Wasser und Methanoldampf), welches aus dem Anodenraum austritt in den Verdampfungsraum 8 der KVV 1 geleitet.

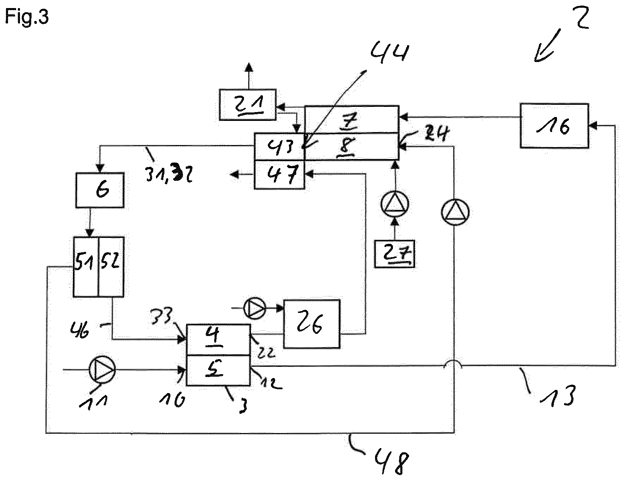

Im Folgenden wird ein weiteres Ausführungsbeispiel der Kondensations-Verdampfungs-Vorrichtung anhand eines weiteren NT-PEM-Brennstoffzellensystems beschrieben (Figur 3).

Sofern nichts anderes beschrieben ist entspricht dieses Ausführungsbeispiel dem vorstehend beschriebenen Ausführungsbeispiel. Gleiche Bauteile haben die gleichen Bezugszeichen.

Auch gemäß diesem Ausführungsbeispiel kann die Reformereinrichtung 6 mehrstufig ausgebildet sein.

Nach der Reformereinrichtung 6 ist gemäß diesem Ausführungsbeispiel eine Abtrenneinrichtung 50 (51, 52) zur Abtrennung von Wasserstoff aus dem Reformat vorgesehen. In dieser Abtrenneinrichtung 50, die beheizbar ist, erfolgt eine Abscheidung des Wasserstoffs über Membranen (z.B. metallische Membranen aus Paladium/Silber) aus dem Reformat. Die Membran ist zwischen Räumen 51 und 52 der Abtrenneinrichtung 50, 6 vorgesehen. In den Raum 51 strömt Reformat ein, wobei der größte Teil des Wasserstoffes über die Membran in Raum 52 gelangt und von dort dem Anodeneinlass 33 des Brennstoffzellenstapels zugeführt wird..

In diesem Fall wird nicht dass Anodenabgas als Gasphase zur Aufnahme von Brennstoff im Verdampfungsraum 8 verwendet, sondern es wird z.B. in die nach der Wasserstoffabscheidung verbleibende CO₂ Phase aus dem Raum 51 entnommen und über den Leitungsabschnitt 48 in den Verdampfungsraum 8 der KVV 1 geleitet.

Weiterhin mündet der Verdampfungsraum 8 in einen weiteren Raum 43 zur Überhitzung, der thermisch vom dem Kondensationsraum 7 isoliert ist bzw. mit diesem nicht thermisch gekoppelt ist, wobei in diesem Raum ein weiterer Energieeintrag derart erfolgt, dass der Brennstoff vollständig verdampft wird.

Dem weiteren Raum 43 wird Wasser aus der Phasentrenneinrichtung 21 zugeführt, das in dem Raum 43 ebenfalls vorzugsweise vollständig verdampft wird.

Demgemäß werden dann nicht nur der nicht in die CO₂ Phase verdunstete Brennstoff, sondern auch Wasser verdampft.

Der Verdampfungsraum 8 wird somit gemäß der hier dargestellten alternativen Ausführungsform mit dem weiteren Raum 43 zur vollständigen Verdampfung bzw. zur Überhitzung zu einer Überhitzungseinrichtung 44 erweitert, in der der restliche nicht verdunstete flüssige Brennstoff oder die Brennstofflösung über den Siedepunkt erhitzt wird, so dass diese verdampfen. Mit diesem Aufbau kann auf eine Medieneinheit verzichtet werden.

Der Raum 43 kann vom Kondensationsraum mittels einer Isolierung (nicht dargestellt) thermisch isoliert sein. Es kann aber auch auf die Isolierung verzichtet werden. Der Raum ist dabei so ausgebildet bzw. angeordnet, dass der Energieeintrag in den Kondensationsraum gering ist bzw. die Kühlwirkung des Verdampfungsraumes nur geringfügig reduziert wird.

Der Raum 43 kann durch ein Heizeinrichtung 47, die bspw. als Wärmetauscher ausgebildet ist, die mit heißen Gasen aus dem katalytischen Brenner 26 versorgt wird, derart erhitzt werden, dass eine reine gasförmige Versorgung von Reformer oder Brennstoffzelle mit den Reaktanden möglich ist.

Weiterhin umfasst ein erfindungsgemäßes Brennstoffzellensystem gemäß der vorliegenden Erfindung, d.h. gemäß allen vorstehend beschrieben Ausführungsformen eine Steuereinrichtung (nicht dargestellt). Die Steuereinrichtung ist ausgebildet, um die Temperatur derart einzustellen, dass die für die Reformer- oder Anodenreaktion benötigte Wassermenge in der Kondensation-Verdampfungs-Vorrichtung auskondensiert wird. Hierfür steuert die Steuereinrichtung einen oder mehrere der Eingangs beschriebenen Parameter und oder Bauteile des Brennstoffzellensystems.

Die vorstehend beschriebenen Ausführungsformen sind miteinander kombinierbar, auch wenn vorstehend mögliche Kombinationsmöglichkeiten nur teilweise aufgezeigt sind.

Methanol wird bei der Beschreibung der vorliegenden Erfindung nur beispielhaft als Brennstoff verwendet. Es können auch andere flüssige Brennstoffe, wie andere Alkohole wie z.B. Ethanol, Ameisensäure, Benzin, Diesel, Dimethylether, Flüssiggas verwendet werden. Prinzipiell sind vor allem Stoffe mit hohen Dampfdrücken (einem niedrigen Siedepunkt z.B. unter 85 °C geeignet) und einer hohen Verdampfungsenthalpie. Diese Eigenschafften treffen insbesondere auf Methanol zu.

Bei Stoffen mit geringerem Siedepunkt kann das Verfahren durch die Verwendung von geeigneten Drücken (höhere Drücke im Verdampfungsraum) oder im Falle von zu hohen Siedepunkten mit niedrigeren Drücken optimiert werden.

Durch die in dieser Erfindung beschriebene Anwendung wird Produktwasser insbesondere aus dem Kathodenabgas gewonnen. Eine Gewinnung von Produktwasser aus dem Anodenabgas ist ebenfalls möglich, jedoch nicht bevorzugt. Ferner können auch andere Gase wie Reformat getrocknet werden.

Gemäß einem weiteren Aspekt der vorliegenden Erfindung kann der aus der Phasentrenneinrichtung 21 abgeführte Gasstrom mit einer weiteren Einrichtung des Brennstoffzellensystems 2 thermisch gekoppelt werden, um diese weitere Einrichtung zu temperieren. Eine weitere Einrichtung können einen oder mehrere Leitungsabschnitte und oder ein oder mehrere Bauteile des Brennstoffzellensystems sein.

Hierbei wird ausgenutzt, dass die Erfindung ein von der Umgebung unabhängiges Temperaturniveau ermöglicht mit der die Fluide aus der KVV austreten.

Diese Eigenschaft kann vorteilhafterweise genutzt werden um Komponenten oder Fluide auf einem stabilen Temperaturniveau zu kühlen bzw. zu temperieren.

Bspw. kann die Pumpe 25 welche das Trägergas fördert stabil betrieben werden indem das Trägergasfluid mithilfe eines Wärmetauschers auf ein vorbestimmtes Temperaturniveau gekühlt bzw. temperiert wird. Dies erfolgt indem auf der kalten Seite eines Wärmetauschers das Brennstoffzellenabgas aus der KVV nach der Phasentrenneinrichtung im Gegenstrom strömt und auf der heißen Seite des Wärmetauschers das Trägergas strömt. Außerdem kann das gekühlte Fluid auch mithilfe eines thermischen Kontaktes auch Bauteile wie Pumpen oder Elektronik temperieren bzw. kühlen

Ein weiterer Effekt der vorliegenden Erfindung ist die Steigerung der Betriebstemperatur von DMFC Systemen und somit der Leistungsdichte der Brennstoffzelle.

Anstatt reinem Brennstoff kann auch eine Brennstofflösung verdampft werden um die Brennstoffzelle zu befeuchten bzw. den für den Betrieb notwendigen Wasserdampf bereitzustellen.

Durch die erfindungsgemäße Kondensation kann Produktwasser, welches für den Betrieb benötigt wird, auch bei hohen Außentemperaturen, z.B. in heißen Gegenden, gewonnen werden. Dies gilt für alle Ausführungsformen der vorliegenden Erfindung.

Die Wärmetauschereinrichtung benötigt einen geringen Bauraum da ein ausreichender Temperaturunterschied über den Verdampfungsraum eingestellt werden kann (z.B. höher als bei der Kühlluft) und Wärme nicht in das Gas sondern in die Flüssigkeit abgegeben wird. Dies ist mit wesentlich kleineren Flächen als bei Gasen möglich ist.

Werden zur Brennstoffverdampfung mehrere parallele Kammern verwendet, wie beispielsweise bei einem Plattenwärmetauscher, so kann am gemeinsamen Eingang für Brennstoff und Gas eine Feinverteilung vorgesehen werden, die das Gas zuverlässig auf die Kammern verteilt.

Dies kann durch eine Verteilungseinrichtung 36 wie einen Gasverteiler bzw. Verteilerstruktur realisiert werden, der über Kapillaren das Gas in die Kammern gleichmäßig verteilt. Die Verteilerstruktur kann auch über eine Zuleitung, welche kleinen Öffnungen in jeden Gasraum aufweist ausgebildet sein.

Um die Kippbarkeit der Vorrichtung zu gewährleisten kann ein hydrophiler, grobporiger Stoff eingebracht werden, der das Gas durchströmen lässt und dabei feinverteilt und ein Schwappen des Brennstoffes bei Kippbewegungen verhindert, so dass kein flüssiger Brennstoff in die Medieneinheit gelangen kann und der Brennstoff nur gasförmig in die Medieneinheit eingeleitet wird.

Eine weitere Verbesserung kann durch eine Hydrophilierung der eingesetzten Oberflächen erreicht werden. Dadurch kann sich ein Brennstofffilm auf Wärmetauscherflächen bilden und dieser kann effizienter die Wärme des auf der anderen Seite strömenden Abgases aufnehmen.

Weitere Ausführungsformen sind auch möglich: z.B. ein Wärmetauscher oder eine Rohrleitung wird dem Kathodenabgas durchströmt (Kondensationsseite, Innenraum) und wird von außen mit Brennstoff (Verdampfungsraum, Außenraum) benetzt. An den Außenflächen des Wärmetauschers strömt mithilfe einer Einhausung das Trägergas (CO₂ Phase) entlang. Es kann auch dieser Wärmetauscher (Kondensationsraum) in einem Behälter mit Methanol stehen also teilweise oder ganz mit Methanol bedeckt sein, wobei die CO₂ Phase durch Methanol geblubbert wird und sich dabei mit Methanol sättigt.

Bei den vorstehend, an Hand der Figuren 1 bis 3 erläuterten Ausführungsformen ist in den Figuren beispielhaft gezeigt, dass dem Kondensationsraum 7 und dem Verdampfungsraum 8 der Kondensations-Verdampfungs-Vorrichtung 1 die entsprechenden Medien derart zugeführt werden, dass eine Führung der Medien im Gleichstrom erfolgt. Gemäß alternativen Ausführungsformen die den vorstehenden Ausführungsformen in allen sonstigen technischen Merkmalen bis auf die Gleichstromführung entsprechen, ist vorzugsweise jedoch vorgesehen, dass dem Kondensationsraum 7 und dem Verdampfungsraum 8 der Kondensations-Verdampfungs-Vorrichtung 1 die entsprechenden Medien derart zugeführt werden, dass eine Führung der Medien im Gegenstrom erfolgt
Gemäß einer alternativen Ausführungsform, die ansonsten den in den Figuren 1 und 3 dargestellten Ausführungsformen entspricht, ist der Kondensationsraum 7 zumindest zweiteilig ausgebildet.

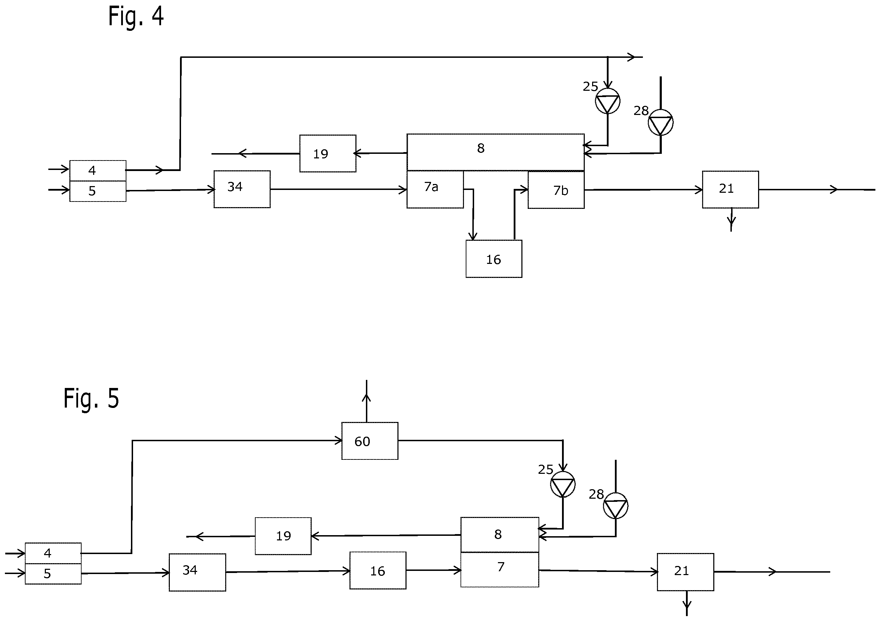

Demgemäß umfasst der Kondensationsraum 7 einen ersten Kondensationsraum 7a und einen zweiten Kondensationsraum 7b, die jeweils unabhängig voneinander mit dem Verdampfungsraum 8 thermisch über die Wärmetauschereinrichtung 9 gekoppelt sind (Figur 4). Der erste und der zweite Kondensationsraum 7a, 7b sowie der Verdampfungsraum 8 können integraler Bestandteil der Wärmetauschereinrichtung 9 sein.

Hierbei ist vorgesehen den Wärmetauscher 16 zwischen dem ersten und dem zweiten Kondensationsraum 7a, 7b anzuordnen bzw. dazwischen zu schalten.

Da die zu kühlenden Abgase eine verhältnismäßig große Oberfläche des Wärmetauschers 16 benötigen um abgekühlt zu werden, ist es vorteilhaft den Kondensationsraum 7a, 7b zweiteilig auszubilden, sodass der Wärmetauscher 16 das Abgas erst nach Erreichen des Taupunktes kühlen muss. Die Oberfläche des Wärmetauschers 16 mit den verdunstenden und kondensierenden Medien ist dann bei gleicher Leistung wesentlich geringer als bei einem Wärmeübergang mit größerer Oberfläche des Wärmetauschers. Bei einer Abkühlung des zu kühlenden Abgases mit kleinerer Oberfläche des Wärmetauschers 16 stehen die tieferen Temperaturen in vorteilhafter effizienter Weise der Methanolverdampfung gegenüber. Ansonsten umfasst dieses Ausführungsbeispiel die Mekmale der an Hand der Figuren 1 oder 3 beschriebenen Ausführungsbeispiele.

Die Führung der Medien erfolgt hierbei im Gegenstrom.

Gemäß einer alternativen Ausführungsform (Figur 5), die ansonsten ebenfalls den in den Figuren 1 und 3 dargestellten Ausführungsformen entspricht und mit der in Figur 4 dargestellten Ausführungsform kombinierbar ist, ist vorgesehen das CO₂ im Anodenabgas über einen Abscheider 60 (bspw. über einen Aminwäscher) derart abzureichern, dass das gesamte aus der Anodenauslass der Anode 4 strömende überstöchiometrische, für den Reformierungsvorgang notwendige Wasser über die Medieneinheit 19 rezirkuliert wird. Dadurch wird der Wasserverlust minimiert, und es muss nur das stöchiometrisch verbrauchte Wasser ersetzt werden, so dass in diesem Fall der Wärmetauscher 16 ebenfalls wesentlich kleiner ausgeführt werden kann.

Prinzipiell kann dieses Verfahren auch zum effizienteren Entfeuchten des Reformatgases anwendbar sein indem statt Abgas Reformat in die Kondensatkammer geleitet wird. Dies ist insbesondere für Brennstoffzellen vorteilhaft die trockenes Reformat wie die HT-PEM Brennstoffzellen benötigen.

### Bezugszeichenliste

- 1: Kondensations-Verdampfungs-Vorrichtung
- 2: Brennstoffzellensystem
- 3: Brennstoffzellenstapel
- 4: Anodenseite
- 5: Kathodenseite
- 6: Reformereinrichtung
- 7: Kondensationsraum
- 7a: erste Kondensationskammer
- 7b: zweite Kondensationskammer8 Verdampfungsraum
- 9: Wärmetauschereinrichtung
- 10: Einlass
- 11: Pumpe
- 12: Kathodenauslass
- 13: Leitungsabschnitt
- 14:
- 15: Vorkühleinrichtung
- 16: Wärmetauscher
- 17: Lüfter
- 18: Auslass
- 19: Medieneinheit
- 20: Leitungsabschnitt
- 21: Phasentrennungseinrichtung
- 22: Anodenauslass
- 23: Leitungsabschnitt
- 24: Einlass
- 25: Pumpe
- 26: Katalytischer Brenner
- 27: Brennstoffbehälter
- 28: Pumpe
- 29: Leitungsabschnitt
- 30: Auslass
- 31: Leitungsabschnitt
- 32: Leitungsabschnitt
- 33: Anodeneinlass
- 34: Wärmetauschereinrichtung
- 35: Methanollösungsbehälter/Pufferspeicher
- 36: Verteilungseinrichtung
- 37: Leitungsabschnitt
- 38: Leitungsabschnitt
- 39: Wärmetauschereinrichtung
- 40: Phasentrennungseinrichtung
- 41: Leitungsabschnitt
- 42: Shift-Stufe
- 43: Raum
- 44: Überhitzungseinrichtung
- 45: Leitungsabschnitt
- 46: Leitungsabschnitt
- 47: Heizeinrichtung
- 48: Leitungsabschnitt
- 50: Abtrenneinrichtung
- 51: Raum
- 52: Raum
- 60: Abscheider

## Patentansprüche

1. Verfahren zum parallelen Kondensieren und Verdampfen für ein Brennstoffzellensystem mit einer Kondensations-/Verdampfungsvorrichtung,
wobei die Kondensations-Verdampfungs-Vorrichtung (KVV) einen Kondensationsraum und einen Verdampfungsraum aufweist, die thermisch über eine Wärmetauschereinrichtung derart miteinander gekoppelt sind, dass
im Kondensationsraum in einem Abgas eines Brennstoffzellenstapels enthaltener Wasserdampf zu Wasser kondensiert wird und
im Verdampfungsraum ein flüssiger Brennstoff eines Zwei-Phasen-Gemisches umfassend den flüssigen Brennstoff und eine Gasphase, zumindest teilweise zu Brennstoffdampf verdampft wird,
wobei die zum Verdampfen benötigte Energie zumindest teilweise durch Abwärme aus einem Abgas eines Brennstoffzellenstapels einer Brennstoffzelle bereitgestellt wird und
der damit verbundenen Energieentzug aus dem Abgas eines Brennstoffzellenstapels zur Kondensation genutzt wird,
**dadurch gekennzeichnet,**
**dass** die Gasphase ein Trägergas umfasst, das CO₂ ist.

2. Verfahren gemäß Anspruch 1,
**dadurch gekennzeichnet,**
**dass** das Trägergas im Brennstoffzellensystem im Kreislauf geführt wird.

3. Verfahren gemäß Anspruch 1 oder 2,
**dadurch gekennzeichnet,**
**dass** das Abgas aus dem das Wasser auskondensiert wird ein Kathoden- und/oder Anodenabgas und vorzugsweise Kathodenabgas eines Brennstoffzellenstapels ist.

4. Verfahren gemäß einem der Ansprüche 1 bis 3,
**dadurch gekennzeichnet,**
**dass** im Verdampfungsraum das Trägergas mit flüssigem Brennstoff derart in Kontakt gebracht wird, dass eine, vorzugsweise vollständige, Sättigung des Trägergases mit Brennstoffdampf erreicht wird.

5. Verfahren gemäß einem der Ansprüche 1 bis 4,
**dadurch gekennzeichnet,**
**dass** das Kathodenabgas vor dem Eintritt in den Kondensationsraum mittels zumindest einer Kühleinrichtung vorgekühlt wird.

6. Verfahren gemäß einem der Ansprüche 1 bis 3,
**dadurch gekennzeichnet,**
**dass** als Brennstoff eine wässrige Brennstofflösung vorgesehen ist.

7. Kondensations-Verdampfungs-Vorrichtung für ein Brennstoffzellensystem umfassend
einen Kondensationsraum zum Kondensieren von Wasser aus Wasserdampf aus einem Abgas eines Brennstoffzellenstapels und
einen Verdampfungsraum zum zumindest teilweisen Verdampfen eines flüssigen Brennstoffes, zu Brennstoffdampf, der derart ausgebildet ist, dass ein flüssiger Brennstoff eines Zwei-Phasen-Gemisches umfassend den flüssigen Brennstoff und eine Gasphase, die ein Trägergas umfasst das CO₂ ist, zumindest teilweise zu Brennstoffdampf verdampft wird, wobei
der Kondensationsraum und der Verdampfungsraum thermisch über eine Wärmetauschereinrichtung derart gekoppelt sind, dass die zum Verdampfen benötigte Energie zumindest teilweise durch Abwärme aus einem Abgas eines Brennstoffzellenstapels bereitgestellt wird und
durch den damit verbundenen Energieentzug aus dem Abgas Wasser auskondensiert wird.

8. Vorrichtung gemäß Anspruch 7,
**dadurch gekennzeichnet,**
**dass** ein Einlass des Kondensationsraumes mit einem Kathodenauslass eines Brennstoffzellenstapels verbunden ist.

9. Vorrichtung gemäß Anspruch 7 oder 8,
**dadurch gekennzeichnet,**
**dass** der Verdampfungsraum mit einem Anodenauslass eines Brennstoffzellenstapels und einem Brennstoffbehälter derart verbunden ist, dass dem Verdampfungsraum aus dem Anodenauslass ein Trägergas, vorzugsweise CO₂, und aus dem Brennstoffbehälter flüssiger Brennstoff zuführbar ist

10. Vorrichtung gemäß einem der Ansprüche 7 bis 9,
**dadurch gekennzeichnet,**
**dass** die Wärmetauschereinrichtung als Plattenwärmeübertragungseinrichtung ausgebildet ist, so dass der Kondensationsraum und der Verdampfungsraum zumindest zwei und insbesondere mehrere Kammern umfassen, die entsprechend alternierend angeordnet sind.

11. Vorrichtung gemäß einem der Ansprüche 8 bis 10,
**dadurch gekennzeichnet,**
**dass** der Verdampfungsraum in einen weiteren Raum zur Überhitzung mündet, wobei in diesem Raum ein weiterer Energieeintrag derart erfolgt, dass der Brennstoff vollständig verdampft.

12. Vorrichtung gemäß Anspruch 11,
**dadurch gekennzeichnet,**
**dass** dem weiteren Raum Wasser zuführbar ist, das in dem Raum vollständig verdampft wird.

13. Brennstoffzellensystem
mit einer Kondensations-Verdampfungs-Vorrichtung gemäß einem der Ansprüche 7 bis 12.

14. Brennstoffzellensystem gemäß Anspruch 13,
**dadurch gekennzeichnet,**
**dass** in einen Leitungsabschnitt zwischen einem Kathodenauslass des Brennstoffzellenstapels und dem Einlass des Kondensationsraums der Kondensations-Verdampfungs-Vorrichtung eine oder mehrere Kühleinrichtungen, die vorzugsweise als Wärmetauscher ausgebildet sind, vorgesehen sind.

15. Brennstoffzellensystem gemäß Anspruch 13 oder 14,
**dadurch gekennzeichnet,**
**dass** nach einem Kondensationsraum der Kondensations-Verdampfungs-Vorrichtung eine Phasentrenneinrichtung vorgesehen ist, wobei ein abgetrenntes Gas dieser Phasentrenneinrichtung thermisch mit einer weiteren Einrichtung oder einem Fluid des Brennstoffzellensystems thermisch gekoppelt ist, um diese weitere Einrichtung oder dieses Fluid zu temperieren, und/oder
**dass** das Brennstoffzellensystem ein flüssig versorgtes DMFC-Brennstoffzellensystem ist, wobei dieses System einen Gaskreislauf aufweist, in dem ein Anodenabgas als Trägergas zumindest teilweise rezirkuliert wird.

## Claims

1. A method of parallel condensing and vaporizing for a fuel cell system with a condensing
/ vaporizing apparatus,
wherein the condensing-vaporizing apparatus (KW) has a condensing cham-ber and an evaporation chamber which are thermally coupled to each other via a heat exchanger in such a way that
water vapor contained in the condensation space in an exhaust gas of a fuel cell stack is condensed into water and
in the evaporation chamber, a liquid fuel of a two-phase mixture comprising the liquid fuel and a gas phase, is at least partially evaporated to fuel vapor
wherein the energy required for evaporation is at least partially provided by waste heat from an exhaust gas of a fuel cell stack of a fuel cell
and the associated energy withdrawal from the exhaust gas of a fuel cell stack is used for condensation,
**characterized in that**
the gas phase comprises a carrier gas that is CO2.

2. Method according to claim 1,
**characterized in that**
the carrier gas is circulated in the fuel cell system.

3. Method according to claim 1 or 2,
**characterized in that**
exhaust gas from which the water is condensed out is a cathode and / or an-ode exhaust gas and preferably cathode exhaust gas of a fuel cell stack.

4. Method according to one of the claims 1 to 3,
**characterized in that**
in the evaporation space, the carrier gas is brought into contact with liquid fuel in such a way that a, preferably complete, saturation of the carrier gas with fuel vapor is achieved.

5. Method according to one of the claims 1 to 4,
**characterized in that**
the cathode exhaust gas is pre-cooled before entering the condensation space by means of at least one cooling device.

6. Method according to one of the claims 1 to 3,
**characterized in that**
an aqueous fuel solution is provided as fuel.

7. Condensation-evaporation apparatus for a fuel cell system,
comprising a condensation space for condensing water from water vapor from an exhaust gas of a fuel cell stack and
an evaporation space for at least partially evaporating a liquid fuel, to fuel va-por formed in such a way that a liquid fuel of a two -phase mixture comprising the liquid fuel and a gas phase comprising a carrier gas that is CO₂, is at least partially vaporized to fuel vapor wherein
the condensation space and the evaporation space are thermally coupled via a heat exchanger apparatus in such a way that the energy required for the evaporation is at least partially provided by waste heat from an exhaust gas of a fuel cell stack and
water is condensed out of the exhaust gas by the associated energy with-drawal.

8. Device according to claim 7,
**characterized in that**
that an inlet of the condensation space is connected to a cathode outlet of a fuel cell stack.

9. Device according to claim 7 or 8,
**characterized in that**
the evaporation space is connected to an anode outlet of a fuel cell stack and a fuel container in such a way that a carrier gas, preferably CO₂, can be sup-plied to the evaporation space from the anode outlet and liquid fuel can be supplied from the fuel container.

10. Device according to one of the claims 7 to 9,
**characterized in that**
the heat exchanger apparatus is embodied as a plate heat transfer device, so that the condensation chamber and the evaporation chamber comprise at least two and particularly several chambers, which are correspondingly ar-ranged in an alternating manner.

11. Device according to one of the claims 8 to 10,
**characterized in that**
that the evaporation chamber opens into another chamber for overheating wherein in this chamber another energy input takes place in such a way that the fuel evaporates completely.

12. Device according to claim 11,
**characterized in that**
water can be supplied to the further chamber, which is completely evaporated in the chamber.

13. The fuel cell system
with a condensation-evaporation device according to one of claims 7 to 12.

14. Fuel cell system according to claim 13
**characterized in that**
a conduit section between a cathode outlet of the fuel cell stack and the inlet of the condensation chamber of the condensation-evaporation device is pro-vided with one or more cooling devices, which are preferably designed as heat exchangers.

15. Fuel cell system according to claim 13 or 14
**characterized in that**
a phase separator is provided after a condensation chamber of the condensa-tion-evaporation device wherein a separated gas from this phase separator is thermally coupled thermally to another device or fluid of the fuel cell system to temper that other device or fluid to temper this other device or this fluid, and/or
that the fuel cell system is a liquid-supplied DMFC fuel cell system wherein this system has a gas cycle in which an anode exhaust gas is at least partially recirculated as a carrier gas.

## Revendications

1. Procédé de condensation et d'évaporation en parallèle pour un système de pile à combustible au moyen d'un dispositif de condensation/évaporation,
sachant que le dispositif de condensation-évaporation (KW) présente un compartiment de condensation et un compartiment d'évaporation qui sont couplés thermiquement l'un à l'autre via un dispositif échangeur de chaleur de telle manière que
dans le compartiment de condensation, de la vapeur d'eau contenue dans un gaz d'échappement d'un empilement de pile à combustible est condensée et
dans le compartiment d'évaporation, un combustible liquide d'un mélange à deux phases comprenant le combustible liquide et une phase gazeuse est au moins en partie évaporée en vapeur de combustible,
sachant que l'énergie nécessaire à l'évaporation est au moins en partie mise à disposition par chaleur perdue à partir d'un gaz d'échappement d'un empilement de pile à combustible d'une pile à combustible et
le prélèvement d'énergie associé à partir du gaz d'échappement d'un empilement de pile à combustible est utilisé pour la condensation,
**caractérisé en ce que**
la phase gazeuse comprend un gaz porteur qui est du CO₂.

2. Procédé selon la revendication 1,
**caractérisé en ce que**
le gaz porteur est conduit en circuit dans le système de pile à combustible.

3. Procédé selon la revendication 1 ou 2,
**caractérisé en ce que**
le gaz d'échappement à partir duquel l'eau est obtenue par condensation est un gaz d'échappement de cathode et/ou d'anode et de préférence un gaz d'échappement de cathode d'un empilement de pile à combustible.

4. Procédé selon l'une des revendications 1 à 3,
**caractérisé en ce que**
dans le compartiment d'évaporation, le gaz porteur est mis en contact avec du combustible liquide de telle manière qu'une saturation, de préférence totale, du gaz porteur en vapeur de combustible soit atteinte.

5. Procédé selon l'une des revendications 1 à 4,
**caractérisé en ce que**
le gaz d'échappement de cathode est prérefroidi au moyen d'au moins un dispositif de refroidissement avant l'entrée dans le compartiment de condensation.

6. Procédé selon l'une des revendications 1 à 3,
**caractérisé en ce que**
une solution de combustible aqueuse est prévue comme combustible.

7. Dispositif de condensation-évaporation pour un système de pile à combustible comprenant
un compartiment de condensation pour condenser de l'eau à partir de vapeur d'eau provenant d'un gaz d'échappement d'un empilement de pile à combustible et
un compartiment d'évaporation pour évaporer au moins en partie un combustible liquide en vapeur de combustible, constitué de telle manière qu'un combustible liquide d'un mélange à deux phases comprenant le combustible liquide et une phase gazeuse qui comprend un gaz porteur qui est du CO₂ soit au moins en partie évaporé en vapeur de combustible, sachant que
le compartiment de condensation et le compartiment d'évaporation sont couplés thermiquement via un dispositif échangeur de chaleur de telle manière que l'énergie nécessaire à l'évaporation soit au moins en partie mise à disposition par chaleur perdue à partir d'un gaz d'échappement d'un empilement de pile à combustible et
de l'eau soit obtenue par condensation à partir du gaz d'échappement au moyen du prélèvement d'énergie associé.

8. Dispositif selon la revendication 7,
**caractérisé en ce que**
une entrée du compartiment de condensation est reliée à une sortie de cathode d'un empilement de pile à combustible.

9. Dispositif selon la revendication 7 ou 8,
**caractérisé en ce que**
le compartiment d'évaporation est relié à une sortie d'anode d'un empilement de pile à combustible et à un contenant de combustible de telle manière qu'un gaz porteur, de préférence du CO₂, puisse être amené au compartiment d'évaporation à partir de la sortie d'anode et du combustible liquide puisse lui être amené à partir du contenant de combustible.

10. Dispositif selon l'une des revendications 7 à 9,
**caractérisé en ce que**
le dispositif échangeur de chaleur est constitué comme dispositif de transfert de chaleur à plaques de telle sorte que le compartiment de condensation et le compartiment d'évaporation comprennent au moins deux et en particulier plusieurs chambres qui sont disposées en alternance de manière correspondante.

11. Dispositif selon l'une des revendications 8 à 10,
**caractérisé en ce que**
le compartiment d'évaporation débouche sur un compartiment supplémentaire de surchauffe, sachant qu'un apport d'énergie supplémentaire est effectué dans ce compartiment de telle manière que le combustible s'évapore entièrement.

12. Dispositif selon la revendication 11,
**caractérisé en ce que**
de l'eau peut être amenée au compartiment supplémentaire qui est entièrement évaporée dans le compartiment.

13. Système de pile à combustible,
présentant un dispositif de condensation-évaporation selon l'une des revendications 7 à 12.

14. Système de pile à combustible selon la revendication 13,
**caractérisé en ce que**
un ou plusieurs dispositifs de refroidissement qui sont constitués de préférence comme échangeurs de chaleur sont prévus dans un tronçon de conduite entre une sortie de cathode de l'empilement de pile à combustible et l'entrée du compartiment de condensation du dispositif de condensation-évaporation.

15. Système de pile à combustible selon la revendication 13 ou 14,
**caractérisé en ce que**
en aval d'un compartiment de condensation du dispositif de condensation-évaporation, un dispositif de séparation de phase est prévu, sachant qu'un gaz séparé de ce dispositif de séparation de phase est couplé thermiquement à un dispositif supplémentaire ou à un fluide du système de pile à combustible pour tempérer ce dispositif supplémentaire ou ce fluide, et/ou
le système de pile de combustible est un système de combustible DMFC à alimentation liquide, sachant que ce système présente un circuit de gaz dans lequel un gaz d'échappement d'anode est au moins en partie remis en circulation comme gaz porteur.
